Europäisches Patentamt

European Patent Office

Office européen des brevets

(11) Publication number: **0 510 800 A1**

## EUROPEAN PATENT APPLICATION

(21) Application number: **92302201.6**

(22) Date of filing: **13.03.92**

(51) Int. Cl.⁵: **C08F 8/50**

(30) Priority: **24.04.91 GB 9108796**

(43) Date of publication of application:
**28.10.92 Bulletin 92/44**

(84) Designated Contracting States:
**AT BE CH DE DK ES FR GB GR IT LI LU MC NL PT SE**

(71) Applicant: **CABOT PLASTICS LIMITED**
**Gate Street**
**Dukinfield Cheshire SK16 4RU(GB)**

(72) Inventor: **Barrell, Moira Anne**
**53, Ullswater Road**
**Congleton, Cheshire CW12 4JO(GB)**
Inventor: **Whitehouse, Robert Sydney**
**90, Bolton Road North**
**Edenfield, Bury, Lancashire BL0 0LT(GB)**
Inventor: **Michaux, Joseph**
**Rue Sur Les Thiers**
**B-4040 Herstal(BE)**

(74) Representative: **Lishman, Peter David**
**Aston Farm House Newtown Lane Shustoke**
**Coleshill Warwickshire B46 2SD(GB)**

(54) **Process for the treatment of mixtures of halogenated and non-halogenated polymers.**

(57) A process for producing stabilised useable thermoplastic compounds from mixtures of halogenated and non-halogenated polymers in any suitable thermoplastic processing equipment wherein the halogenated component is subjected to controlled thermal degradation and evolved halogen acid gas is reacted with a metal oxide, metal aliphatic carboxylic acid salt, or mixtures thereof.

EP 0 510 800 A1

The present invention relates to a process for treating mixtures of halogenated and non-halogenated polymers in any suitable thermoplastic processing equipment. The halogenated component is subjected to controlled thermal degradation to produce a stabilised useable thermoplastic compound. The process results in no evolution of halogen containing volatiles. The process can be carried out in equipment such as a Banbury mixer, twin screw extruder, single screw extruder, or the like.

One such process is already known from U.S. Patent No 4,643,861. According to this a composition of PP/PVdC (polypropylene/polyvinylidene chloride) scrap plus hydrated lime (Ca(OH)$_2$ ) and a metal carboxylate is subjected to a densification process where the temperature is kept down to 20-100°F (11-56°C) below the melting point of the polymeric film by the addition of water. A reaction is said to take place during this densification process lasting 5-15 minutes. This process differs from the present invention in a number of respects. Firstly the present invention requires a temperature above which the polymer is melted for the reaction to take place.

The present invention also specifically requires the use of either a metal oxide or a metal aliphatic carboxylic acid salt whereas in the above mentioned US patent, the process requires the use of hydrated lime which is not the same as calcium oxide.

A further distinction is the requirement of the patent that water be added in an amount of 5 to 25% by weight to maintain the reaction temperature below the melting point of the polymer, whereas in the present invention water or other solvent is not added.

Also known in the prior art are Japanese Patent Specification Nos. 51-3750, 53-21277 and 56-122894 wherein waste plastics are thermally decomposed for subsequent possible utility as fuels. The patents refer to reacting the waste plastics in the presence of calcium compounds including calcium oxide, calcium hydroxide or calcium carbonate. The purpose for adding the calcium-containing compounds is to react with any HC1 or other noxious gases produced. Contrary to the Japanese patents, however, the present invention is clearly directed to recovering useable thermoplastic compositions from mixtures of halogenated and non-halogenated polymers, including waste materials thereof.

The present process involves a controlled thermal degradation to produce a stabilised halogenated polymeric component, carried out in the presence of a specified quantity of a metal oxide or metal aliphatic carboxylic acid salt which results in the recovery of a material suitable for reuse.

Accordingly, it is an object of this invention to provide a process enabling recovery of useable thermoplastic compounds from mixtures of halogenated and non-halogenated polymers.

It is another object of this invention to provide a process enabling recovery of useable thermoplastic compounds from mixtures of halogenated and non-halogenated polymers, wherein either or both of the polymers are derived from waste materials.

It is yet another object of this invention to provide a process enabling recovery of useable thermoplastic compounds from mixtures of halogentated and non-halogenated polymers wherein any conventional processing equipment may be utilised.

It is yet another object of this invention to provide a process enabling recovery of useable thermoplastic compounds from mixtures of halogenated and non-halogenated polymers whereby corrosion of the processing equipment is minimised.

The present invention relates to a non-solvented process for recovering a stabilised useable thermoplastic composition from a mixture of at least one halogenated polymer and at least one non-halogenated thermoplastic polymer, wherein the halogenated polymer is subjected to controlled thermal degradation while the non-halogenated thermoplastic polymer is not substantially degraded, to produce a re-useable thermoplastic composition. The mixture which may be, for example, in the form of laminated film, coated bottles, and the like is first made into a processable form by any conventionally known means such as chopping, granulating or agglomerating.

The polymeric mixture is then combined with at least one metal oxide or metal aliphatic carboxylic acid salt which will yield a halogenated metal salt which is stable under the conditions required to process and use the resultant thermoplastic composition. The metal oxide or metal aliphatic carboxylic acid salt is utilised in an amount which is at least the stoichiometric equivalent required to react with all the halogen contained in the mixture. Preferably the amounts of metal oxide or metal aliphatic carboxylic acid salt range from at least 1.0 to about 3.0 times the stoichiometric amount necessary to prevent evolution of all the halogen in the polymeric mixture. If insufficient metal oxide or metal aliphatic carboxylic acid salt were to be added then halogen in the polymeric mixture could be evolved causing corrosion of the processing equipment.

The metal oxide or metal aliphatic carboxylic acid salt should not be used in any amount which would result in difficulties during processing of the polymeric material and/or difficulties in utilising the resulting thermoplastic compound. It is possible to utilise mixtures of metal oxides, or mixtures of metal aliphatic carboxylic acid salts, or mixtures of metal oxides and metal aliphatic carboxylic acid salts.

The mixture of polymers and metal oxide or metal aliphatic carboxylic acid salt is subjected to conditions of elevated temperature such that the polymeric mixture is melted and the halogen containing polymeric compound is thermally degraded to evolve halogen acid gas which reacts with the metal oxide and/or metal aliphatic carboxylic acid salt. The mixture of polymers and metal oxide or metal aliphatic carboxylic acid salt may be mixed by means of any apparatus known to those skilled in the art. Moreoever it is not critical whether the mixture of polymers and metal oxide/metal aliphatic carboxylic acid salt is premixed prior to being subjected to the conditions of elevated temperature. The following are exemplary methods known for carrying out the reaction.

Preferably suitable for use in processing the mixture of polymers and metal oxide/metal aliphatic carboxylic acid salt are Banbury mixers, extruders, two roll mills, or any other devices utilised in the industry. The polymeric mixture and metal oxide/metal aliphatic carboxylic acid salt may be premixed or fed independently as long as the metal oxide/metal aliphatic carboxylic acid salt is fed in prior to the halogenated polymeric component liberating any halogen acid gas.

The mixture of polymers and metal oxide/metal aliphatic carboxylic acid salt is heated to a temperature such that the polymeric mixture is melted and the halogen containing polymeric compound is thermally degraded to evolve halogen acid gas which reacts with the metal oxide/metal aliphatic carboxylic acid salt. The temperatures utilised in the processing of the polymeric mixture with the metal oxide/metal aliphatic carboxylic acid salt reactants, will depend upon the ingredients utilised in the reaction. The temperature should not, however, be so high as to cause either the metal oxide or metal aliphatic carboxylic acid salt to decompose, or to cause the non-halogenated polymer to significantly decompose. Where the metal-containing compound utilised is a metal aliphatic carboxylic acid salt, the resulting stabilised polymeric compound, containing the products of the reaction, is then recovered by any conventional manner, for example, by forcing through a die and forming pellets, by granulating, or the like. Where the metal containing compound, however, is a metal oxide, water is evolved during the reaction. This evolved water is removed or captured by any suitable technique. For example, the water may be captured by utilising an amount of metal oxide in excess of that which is required for the reaction. Alternatively, the water may be removed by vacuum extraction, or any other technique which could be easily applied for the removal of the water. Once the water has been removed or captured the resulting stabilised polymeric compound containing the product of the reaction is then recovered utilising any conventional means.

Polymers suitable for use with the present invention are as follows. The halogen containing polymer may be any halogen containing polymer, preferably those where the halogen is chlorine. In particular, polyvinyl chloride and polyvinylidene chloride copolymers are most likely to be used with the present process.

The non-halogen containing polymer suitable for use in the present invention may be any non-halogen containing polymer which will not thermally degrade prior to any substantial thermal degradation of the halogen containing polymeric component of the mixture. It is particularly preferred to utilise as the non-halogen containing polymer, any polyolefin, such as polyethylene, polypropylene; styrenics, such as polystyrene; and copolymers of olefins such as copolymers of ethylene with vinyl acetate; and copolymers of styrenics.

While any metal oxide may be used in the process of the present invention provided it is one which will yield a stable halogenated metal salt, it is preferred that the metal oxide be one where the metal is selected from the group consisting of calcium, magnesium and zinc. In the case where a metal aliphatic carboxylic acid salt, which will yield a stable halogenated metal salt, is to be used, it is preferred that the metal be selected from the group consisting of sodium, potassium, calcium, zinc, magnesium, aluminium, tin and barium. It is preferred that the aliphatic carboxylate contain a chain of 2-30 carbon atoms, and more preferably 2-20 carbon atoms.

Exemplary of the aliphatic carboxylic acid radicals suitable for use in the present invention are stearates, such as calcium or zinc stearate, citrates, tartrates, adipates and resinates.

The stabilised thermoplastic polymeric compound obtained as a result of the process, can be mixed with additives of any type known within the industry. The various additives are incorporated into the polymeric compound in order to render the polymeric compound suitable for given purposes. For example, there may be mixed with the polymeric compound, antioxidants, antistatic agents, plasticisers, nucleating agents, impact modifiers, pigments, fillers, reinforcements, lubricants, processing aids, coupling agents, and the like. Examples of materials which function for these purposes are well known to those in the industry and are generally commercially available.

The thermoplastic polymeric compound obtained as a result of the process can also be mixed with other polymeric compounds.

In order to evaluate the physical properties of the polymeric materials resulting from the process of the present invention, there are utilised the following well known test procedures:

| Property | Method |
|---|---|
| Melt flow index "MFI" | ISO 1133 |
| Ash content | ISO 247 |
| Izod notched impact strength | ISO 180 |
| Tensile strength | ISO R527 |
| Elongation | ISO R527 |
| Flexural modulus | ISO 178 |

This invention is further illustrated by the following examples wherein all parts are given by weight.

EXAMPLES 1-4.

Examples 1 - 4 of the present application demonstrate that different metal oxides are equally suitable for use in carrying out the present invention and also that mixtures of metal oxides may be satisfactorily utilised. In carrying out examples 1-4, the polymeric mixture contains 90% by weight polypropylene and 10% by weight polyvinylidene chloride copolymer, wherein the chlorine content is 50% by weight of the polyvinylidene chloride copolymer. In carrying out examples 1-4 the processing conditions employed are the same.

In particular, the polymeric mixture and the metal oxide utilised in examples 1-4 as shown in the following Table 1, are premixed and then introduced into a Haake Rheocord 90 type mixer manufactured and sold by Fisons Instruments. The polymeric mixture and metal oxide premix is then mixed for a period of 8 minutes at a temperature of approximately 200°C at a mixer speed of 125 rpm. The resultant thermoplastic polymer is recovered from the mixer and, as shown in Table 1, in each instance exhibits no odour of halogen.

From the conditions employed in carrying out examples 1-4 and the lack of any detectable odour of halogen, it can be concluded that all of the halogen acid evolved from the halogen containing polymer was reacted with the metal oxide. Moreoever, there was no odour of halogen detected during the processing of examples 1-4.

TABLE 1

| Example No. | 1 | 2 | 3 | 4 |
|---|---|---|---|---|
| PP/PVdC*, % | 92 | 93 | 94 | 88 |
| Calcium oxide, % | 8 | 3.5 | - | - |
| Magnesium oxide, % | - | 3.5 | 6 | - |
| Zinc oxide, % | - | - | - | 12 |
| Stoichiometric equivalent of metal oxide to halogen, % | 3.63 | 3.06 | 2.65 | 5.02 |
| Molar ratio of metal oxide to halogen ** | 2.20 | 2.29 | 2.27 | 2.39 |
| Halogen odour | NO | NO | NO | NO |

\* polypropylene/polyvinylidene chloride copolymer.
\*\* includes at least 1.0 mole equivalent of metal oxide required to capture evolved water.

In the following examples 5 and 6 there is demonstrated the use of a combination of a metal oxide together with a metal aliphatic carboxylic acid salt in carrying out the process of the present invention. Utilised as the metal oxide is calcium oxide and as the metal aliphatic carboxylic acid salt is zinc stearate.

EXAMPLES 5 & 6

Formulations at two different levels of metal oxide/metal aliphatic carboxylic acid salt concentrations are described in examples 5 and 6 in the processing of a polymeric mixture containing 90% polypropylene and 10% polyvinylidene chloride copolymer, wherein the chlorine content is 50% by weight of the polyvinylidene chloride copolymer. Also included in the formulation is waste polypropylene film. The formulations are shown in the following Table 2. In processing the formulations of examples 5 and 6, each of the

4

ingredients of the formulation are weighed and separately added to a Banbury mixer.

The batch weight of the formulation is 1100g and the mixing is carried out at a temperature slightly above the melting temperature of polypropylene for a period of 1.5 minutes subsequent to fluxing of the polymer, under a pressure of 40 psi (2.8 bar). The material is removed from the Banbury mixer and granulated prior to introduction into a Dolci single screw extruder having a 45 mm. barrel wherein, at a temperature exceeding 190°C, the halogen acid gas is reacted with the combination of oxide and stearate. The resulting stabilised thermoplastic polymeric material obtained from the extruder exhibits no odour of halogen.

Further characteristics of the resultant polymer obtained in example 6 are described in Table 2. Moreoever, there was no odour of halogen detected during the processing of examples 5 & 6.

Table 2

| Example number | 5 | 6 |
|---|---|---|
| PP/PVdC* % | 73 | 78 |
| Polypropylene % | 10 | 10 |
| Calcium oxide % | 13 | 8 |
| Zinc stearate % | 4 | 4 |
| Molar ratio of metal oxide/metal aliphatic carboxylic acid salt mixture to halogen** | 4.64 | 2.72 |
| Stoichiometric equivalent of metal oxide/metal aliphatic carboxylic acid salt mixture to halogen, % | 3.66 | 4.41 |
| Halogen odour | NO | NO |
| MFI, 2.16kg @ 230°C, dg/min | - | 5.2 |
| Ash content, % | - | 8.6 |
| Izod notched impact strength, KJ/m$^2$ | - | 2.7 |
| Tensile strength at yield, MPa | | 24 |
| Tensile strength at break, MPa | - | 12 |
| Elongation at break, % | - | 43 |
| Flexural modulus, GPa | - | 1.18 |

\* polypropylene/polyvinylidene chloride copolymer.
\** includes approximately 1.0 mole equivalent of metal oxide required to capture evolved water.

In the following examples 7 and 8 there is demonstrated the use of a given metal oxide for the purpose of preventing the evolution of the halogen acid gas, at two different stoichiometric levels. As will be demonstrated hereinafter it was established that both levels of metal oxide were adequate to prevent the evolution of the evolved halogen acid gas.

EXAMPLES 7 & 8

In examples 7 and 8 a polymeric mixture containing 90% polypropylene and 10% polyvinylidene chloride, wherein the chlorine content is 50% by weight of the polyvinylidene chloride, is mixed with waste polypropylene film and calcium oxide in the proportions shown in Table 3. In processing the formulations, the ingredients specified in examples 7 and 8, shown in Table 3, are separately added into a Banbury mixer. The batch weight of 1100g is introduced into the Banbury mixer where mixing occurs at a temperature slightly above the melting temperature of polypropylene under a pressure of 40 psi ( 2.8 bar) for a period of 1.5 minutes subsequent to fluxing of the polymer. The material is removed from the Banbury mixer and granulated.

The granulated material is then introduced into a Betol single screw extruder, Model 2520/J, having a barrel diameter of 25 mm. wherein the calcium oxide reacts with the halogen acid gas at a temperature exceeding 190°C. The resulting stabilised thermoplastic polymeric mixtures recovered from the extruder exhibit no odour of halogen. Further physical properties of the resultant polymers produced in examples 7 and 8 are shown in the following Table 3. During the process for producing the resulting thermoplastic polymeric mixtures no odour of halogen was detected.

Table 3

| Example number | 7 | 8 |
|---|---|---|
| PP/PVdC*, % | 73 | 78 |
| Polypropylene, % | 14 | 14 |
| Calcium oxide, % | 13 | 8 |
| Molar ratio of metal oxide to halogen** | 4.52 | 2.60 |
| Stoichiometric equivalent of metal oxide to halogen, % | 2.88 | 3.08 |
| Halogen odour | NO | NO |
| MFI, 2.16kg @ 230°C, dg/min | 6.4 | 8.2 |
| Ash content, % | 12.6 | 8.2 |
| IZod notched impact strength, KJ/m$^2$ | 2.8 | 3.0 |
| Tensile strength at yield, MPa | 29 | 30 |
| Tensile strength at break, MPa | 16 | 25 |
| Elongation at break, % | 49 | 33 |

* polypropylene/polyvinylidene chloride copolymer.
** includes at least 1.0 mole equivalent of metal oxide required to capture evolved water.

In the following example 9 there is illustrated the process of the present invention carried out in a twin screw extruder.

EXAMPLE 9

In this example the polymeric mixture contains 90% polypropylene and 10% polyvinylidene chloride copolymer, wherein the chlorine content is 50% by weight of the polyvinylidene chloride copolymer. The polymeric mixture and the calcium oxide are introduced as separate ingredients directly into a Werner and Pfleiderer model ZSK40 twin screw extruder having a barrel of 40 mm. diameter. The extruder is operated at temperatures in excess of 220°C at a screw speed of 250 rpm and a pressure of 14 bar. The resulting stabilised polymeric material obtained from the extruder exhibits no odour of halogen. Further properties of the resultant thermoplastic polymeric material are found in the following Table 4.

Table 4

| Example number | 9 |
|---|---|
| PP/PVdC* % | 82 |
| Calcium oxide % | 18 |
| Molar ratio of metal oxide to halogen** | 5.57 |
| Stoichiometric equivalent of metal oxide to halogen, % | 3.23 |
| Halogen odour | NO |
| MFI, 2.16kg @ 230°C, dg/min | 5.0 |
| Ash content, % | 18.1 |
| Izod notched impact strength, KJ/m$^2$ | 2.8 |
| Tensile strength @ yield, MPa | 26 |
| Tensile strength @ break, MPa | 16 |
| Elongation at break, % | 71 |
| Flexural modulus, GPa | 1.2 |

* polypropylene/polyvinylidene chloride copolymer.
** includes at least 1.0 mole equivalent of metal oxide required to capture evolved water.

EXAMPLES 10-19

Examples 10-19 of the present application demonstrate that different metal aliphatic carboxylic acid salts are equally suitable for use in carrying out the present invention and also that mixtures of metal aliphatic carboxylic acid salts may be satisfactorily used. In carrying out examples 10-19, the polymeric mixture contains 90% by weight polypropylene and 10% by weight polyvinylidene chloride copolymer, wherein the chlorine content is 50% by weight of the polyvinylidene chloride copolymer. In carrying out examples 10-19 the processing conditions employed are the same. In particular, the polymeric mixture and the metal aliphatic carboxylic acid salt utilised in examples 10-19 as shown in the following Table 5, are premixed and then introduced into a Haake Rheocord 90 type mixer as used in examples 1-4. The polymeric mixture and metal aliphatic carboxylic acid salt premix is then mixed for a period of 5 minutes at a temperature of 210°C at a mixer speed of 50 rpm. During processing, a glass rod dipped in a 5.O N (normal) solution of ammonium hydroxide is placed at the top of the mixer where any evolved gas would escape. No white clouds of ammonium chloride are formed indicating that no halogen acid is evolved. The resultant stabilised thermoplastic polymer is recovered from the mixer.

From the conditions employed in carrying out examples 10-19 and the lack of any detectable halogen, it is evident that all of the halogen acid evolved from the halogen containing polymer was reacted with the metal aliphatic carboxylic acid salt. Moreover there was no halogen detected while carrying out examples 10-19.

In the following examples 20-22 there is demonstrated another manner for producing granulate from the polymeric composition of the invention and, further, the production of injection moulded specimens from the granulates. Also, these examples demonstrate three metal aliphatic carboxylic acid salts utilised to react with halogen acid gas.

EP 0 510 800 A1

Table 5

| Example No. | 10 | 11 | 12 | 13 | 14 | 15 | 16 | 17 | 18 | 19 |
|---|---|---|---|---|---|---|---|---|---|---|
| PP/PVdC*, % | 65 | 66.7 | 65 | 66.7 | 85 | 85 | 75 | 70 | 65 | 67 |
| Sodium stearate, % | 35 | - | - | - | - | - | - | - | - | - |
| Calcium stearate, % | - | 33.3 | - | - | - | - | - | - | - | - |
| Aluminium stearate, % | - | - | 35 | - | - | - | - | - | - | - |
| Zinc stearate, % | - | - | - | 33.3 | - | - | - | - | - | - |
| Di sodium adipate, % | - | - | - | - | 15 | - | - | - | - | - |
| Calcium adipate, % | - | - | - | - | - | 15 | - | - | - | - |
| Sodium hydrogen tartrate, % | - | - | - | - | - | - | 25 | - | - | - |
| Sodium citrate, % | - | - | - | - | - | - | - | 30 | - | - |
| Sodium abietate, % | - | - | - | - | - | - | - | - | 35 | - |
| Calcium resinate, % | - | - | - | - | - | - | - | - | - | 16.5 |
| Zinc resinate, % | - | - | - | - | - | - | - | - | - | 16.5 |
| Stoichiometric equivalent of metal aliphatic carboxylic acid salt to halogen, % | 30.1 | 29.9 | 29.1 | 30.7 | 11.8 | 11.5 | 19.5 | 23.1 | 30.7 | 30.3 |
| Molar ratio of metal aliphatic carboxylic acid salt to halogen | 1.25 | 1.17 | 1.31 | 1.13 | 1.32 | 1.36 | 1.38 | 1.42 | 1.22 | 1.13 |
| Halogen detected? | NO | NO | NO | NO | NO | NO | NO | NO | NO | NO |

\* polypropylene/polyvinylidene chloride copolymer

EXAMPLES 20-22

In examples 20-22 a polymeric mixture containing 90% polypropylene and 10% polyvinylidene chloride copolymer, wherein the chlorine content is 50% by weight of the polyvinylidene chloride copolymer, is mixed with various metal aliphatic carboxylic acid salts as shown in Table 6. In processing the formulations, the ingredients specified in examples 20-22 and shown in Table 6 are separately added into a Banbury mixer. In each case the batch weight of 1200g is introduced into the Banbury mixer where mixing occurs at a temperature slightly above the melting temperature of polypropylene under a pressure of 40 psi (2.8 bar). Mixing is for a period of between 5 and 10 minutes subsequent to fluxing of the polymer, for examples 20 and 21; and for a period of 1.5 minutes subsequent to fluxing of the polymer, for example 22. The material is removed from the Banbury mixer and granulated.

The granulated material is then introduced into a Battenfeld injection moulding machine, Model BA300 CD plus, having a barrel diameter of 30mm wherein the reaction of the halogen acid gas with the metal aliphatic carboxylic acid salt occurs at 230°C.

The resulting moulded test pieces of polymers produced exhibited no odour of halogen. Physical properties of the resultant polymers produced in examples 20-22 are shown in the following Table 6.

Table 6

| Example No. | 20 | 21 | 22 |
|---|---|---|---|
| PP/PVdC*, % | 65 | 65 | 75 |
| Sodium stearate, % | 35 | - | - |
| Aluminium stearate, % | - | 35 | - |
| Sodium hydrogen tartrate, % | - | - | 25 |
| Stoichiometric equivalent of metal oxide to halogen, % | 30.1 | 29.1 | 19.5 |
| Molar ratio of metal aliphatic carboxylic acid salt to halogen, % | 1.25 | 1.31 | 1.38 |
| Halogen odour | NO | NO | NO |
| MFI, 2.16kg @ 230°C, dg/min | - | 34.3 | 4.9 |
| Ash content, % | 3.2 | 4.1 | 8.8 |
| Izod notched impact strength, kJ/m$^2$ | 1.7 | 2.9 | 2.6 |
| Tensile strength at break, MPa | 20 | 17 | - |
| Elongation at break, % | 6 | 10 | - |
| Flexural modulus, GPa | 2.09 | 0.68 | - |

\* polypropylene/polyvinylidene chloride copolymer

From a review of the data shown in the foregoing tables 1-6, it will be readily observed that the stabilised thermoplastic polymeric materials obtained by means of the process of the present invention are characterised by having physical properties comparable to those of standard commercially available grades of polypropylene having melt flow index (MFI) properties of approximately the range shown in the examples of the invention. When drawing a comparison with the standard grades of polypropylene, the thermoplastic polymeric materials of the present invention exhibit comparable values for tensile strength, flexural modulus and Izod notched impact strength. Accordingly, the thermoplastic polymeric materials of the present invention would be suitable as starting materials for the production of polymeric compounds.

While the present invention has been disclosed in connection with the embodiments hereof, it should be understood that there are other embodiments which fall within the spirit and scope of the invention and that the invention is susceptible to modification, variation and change without departing from the proper scope or fair meaning of the following claims.

**Claims**

1. A non-solvented process for recovering a stabilised useable thermoplastic composition from a mixture of at least one halogenated polymer and at least one non-halogenated thermoplastic polymer wherein the halogenated polymer is subjected to controlled thermal degradation while the non-halogenated thermoplastic polymer is not substantially degraded, to produce a resultant stabilised thermoplastic composition, which comprises:

forming into a handleable material the mixture of polymers,

combining the mixture of polymers with at least one metal oxide which will yield a halogenated metal salt, which is stable under the conditions required to process and use the resultant thermoplastic composition, in an amount which is at least the stoichiometric equivalent required to react with all the halogen contained in the mixture, subjecting the mixture of polymers and metal oxide to conditions of elevated temperature such that the polymeric mixture is melted and the halogen-containing polymers are thermally degraded to evolve halogen acid gas which is reacted with the metal oxide,

removing or capturing evolved water, and

collecting the resultant stabilised thermoplastic polymeric composition.

2. The process of claim 1 wherein the halogen of the halogen containing polymer is chlorine.

3. The process of claim 1 wherein the metal oxide is selected from the group consisting of calcium oxide, magnesium oxide and zinc oxide.

4. The process of claim 3 wherein the metal oxide is calcium oxide.

5. The process of claim 1 wherein the amount of metal oxide combined with the mixture of polymers ranges from at least 1.0 to about 3.0 times the stoichiometric amount necessary to react with all the halogen in the polymeric mixture.

6. The process of claim 1 wherein the evolved water is captured by adding a further amount of metal oxide.

7. A stabilised thermoplastic polymeric composition resulting from the process of claim 1.

8. The composition of claim 7 wherein at least one additive is incorporated.

9. An article of manufacture formed from the composition of claim 7 or 8.

10. A non-solvented process for recovering a stabilised useable thermoplastic composition from a mixture of at least one halogenated and at least one non-halogenated thermoplastic polymer wherein the halogenated polymer is subjected to controlled thermal degradation while the non-halogenated thermoplastic polymer is not substantially degraded, to produce a resultant stabilised thermoplastic composition, which comprises:

forming into a handleable material the mixture of polymers,

combining the mixture of polymers with at least one metal aliphatic carboxylic acid salt which will yield a halogenated metal salt, which is stable under the conditions required to process and use the resultant thermoplastic composition, in an amount which is at least the stoichiometric equivalent required to react with all the halogen contained in the mixture,

subjecting the mixture of polymers and metal aliphatic carboxylic acid salt to conditions of elevated temperature such that the polymeric mixture is melted and the halogen- containing polymers are thermally degraded to evolve halogen acid gas which is reacted wtih the metal aliphatic carboxylic acid salt, and

collecting the resultant stabilised thermoplastic polymeric composition.

11. The process of claim 10 wherein the halogen of the halogen containing polymer is chlorine.

12. The process of claim 10 wherein the metal of the metal aliphatic carboxylic acid salt is selected from the group consisting of sodium, potassium, calcium, zinc, magnesium, tin, aluminium and barium.

**13.** The process of claim 10 wherein the aliphatic carboxylate contains a chain of 2-30 carbon atoms.

**14.** The process of claim 13 wherein the aliphatic carboxylate contains a chain of 2-20 carbon atoms.

**15.** The process of claim 14 wherein the metal aliphatic carboxylic acid salt is selected from the group consisting of stearates, citrates, tartrates, adipates and resinates.

**16.** The process of claim 10 wherein the amount of metal aliphatic carboxylic acid salt combined with the mixture of polymers ranges from at least 1.0 to about 3.0 times the stoichiometric amount necessary to react with all the halogen in the polymeric mixture.

**17.** A stabilised thermoplastic polymeric composition resulting from the process of claim 10.

**18.** The composition of claim 17 wherein at least one additive is incorporated.

**19.** An article of manufacture formed from the composition of claim 17 or 18.

**20.** A non-solvented process for recovering a stabilised useable thermoplastic composition from a mixture of at least one halogenated and at least one non-halogenated thermoplastic polymer wherein the halogenated polymer is subjected to controlled thermal degradation while the non-halogenated thermoplastic polymer is not substantially degraded, to produce a resultant stabilised thermoplastic composition, which comprises:

forming into a handleable material the mixture of polymers,

combining the mixture of polymers with at least one metal oxide and at least one metal aliphatic carboxylic acid salt which will yield halogenated metal salts, which are stable under the conditions required to process and use the resultant thermoplastic composition, in an amount which is at least she stoichiometric equivalent required to react with all the halogen contained in the mixture,

subjecting the mixture of polymers and metal oxide and metal aliphatic carboxylic acid salt to conditions of elevated temperature such that the polymeric mixture is melted and the halogen containing polymers are thermally degraded to evolve halogen acid gas which is reacted with the metal oxide and the metal aliphatic carboxylic acid salt,

removing or capturing evolved water, and

collecting the resultant stabilised thermoplastic polymeric composition.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 022 214 (BABCOCK KRAUSS-MAFFEI INDUSTRIEANLAGEN GMBH)<br>* page 2, line 26 - page 3, line 4 *<br>* page 19 - page 20 *<br>* page 22 - page 23; claims 1-19 *<br>--- | 1-20 | C08F8/50 |
| A | JOURNAL OF POLYMER SCIENCE: PART A-1<br>vol. 8, 1970,<br>pages 1596 - 1599; 'THERMAL DEGRADATION OF POLY(VINYL CHLORIDE) IN PRESENCE OF A SECOND POLYMER'<br>* page 1596 - page 1599 *<br>--- | 1 | |
| A | DE-A-2 424 605 (TRACOR INC.)<br>* claims 1-7 *<br>--- | 1 | |
| A | US-A-4 375 531 (J. F. ROSS)<br>* the whole document *<br>--- | 1 | |
| A | US-A-2 969 403 (H. H. FREY)<br>* the whole document *<br>--- | 1 | TECHNICAL FIELDS SEARCHED (Int. Cl.5 ) |
| A | GB-A-600 145 (I C I)<br>* the whole document *<br>--- | 1 | C08F<br>C10B |
| D,A | US-A-4 643 861 (J. F. HAGER)<br>* the whole document *<br>----- | 1 | B29B |

The present search report has been drawn up for all claims

| Place of search | Date of completion of the search | Examiner |
|---|---|---|
| THE HAGUE | 20 JULY 1992 | PERMENTIER W.A. |

EPO FORM 1503 03.82 (P0401)